# EUROPEAN PATENT APPLICATION

(11) **EP 4 733 931 A1**
(43) Date of publication of application: **29.04.2026**
(21) Application number: 24844648.6
(22) Date of filing: 15.07.2024
(51) Int. Cl.: G06F 8/65, G06F 8/71

(54) **PROCESSING METHOD AND APPARATUS, AND DELIVERY VEHICLE**

(30) Priority: 21.07.2023 CN 202310911510
(71) Applicant: Shenzhen Yinwang Intelligent Technologies Co., Ltd., Shenzhen, Guangdong 518110 (CN)
(72) Inventor: YANG, Haiquan, Shenzhen, Guangdong 518129 (CN); RONG, Yinhua, Shenzhen, Guangdong 518129 (CN); YANG, Jiduocai, Shenzhen, Guangdong 518129 (CN); SUN, Jianchao, Shenzhen, Guangdong 518129 (CN); LIANG, Peng, Shenzhen, Guangdong 518129 (CN)
(74) Representative: Pfenning, Meinig & Partner mbB
(86) International application number: PCT/CN2024/105394
(87) International publication number: WO 2025/020956

(57) **Abstract**

Embodiments of this application provide a processing method and apparatus, and a transportation means. The method may be applied to the field of intelligent vehicles. The method includes: obtaining an update sequence of a plurality of components and information about a mandatory matching relationship component set in an over the air OTA update process, where the plurality of components include a first component; and when the first component fails to be updated, based on the update sequence and the information about the mandatory matching relationship component set, updating at least a part of to-be-updated components and/or rolling back a part of successfully updated components, where an update ranking of the to-be-updated component is later than an update ranking of the first component, and an update ranking of the successfully updated component is earlier than the update ranking of the first component. According to the foregoing method, efficiency of OTA update can be improved, and unnecessary rollback operations can be reduced.

## Description

### TECHNICAL FIELD

This application claims priority to Chinese Patent Application No. 202310911510.3, filed with the China National Intellectual Property Administration on July 21, 2023 and entitled "PROCESSING METHOD AND APPARATUS, AND TRANSPORTATION MEANS", which is incorporated herein by reference in its entirety.

### BACKGROUND

As intelligent vehicles are widely used in daily life, users expect that the intelligent vehicles and related devices can bring more comfortable intelligent experience. Against such a background, an over the air (over the air, OTA) technology gradually becomes an indispensable basic function of the intelligent vehicle. Vehicle OTA may mean that a software package is pushed from a cloud to a vehicle, and functions such as software installation and/or update are completed on the vehicle. The over the air technology is used, so that a new function can be added to the vehicle or an existing function of the vehicle can be optimized, thereby greatly enriching the intelligent experience of the user.

Each intelligent vehicle may include dozens or even hundreds of electronic control units (electronic control units, ECUs). Therefore, some ECUs may fail to be updated in an OTA update process. When some ECUs fail to be updated, a current processing strategy is that the vehicle may trigger vehicle rollback. In other words, a failure in any component causes the vehicle to roll back successfully updated components to a version before the update. However, in such a processing manner, there may be a risk of a failure in a rollback procedure, and this results in a decrease in an update success rate of an OTA update task; and in addition, the vehicle may perform an unnecessary rollback operation, and this makes overall OTA update time-consuming and highly complex.

### SUMMARY

Embodiments of this application provide a processing method and apparatus, and a transportation means, so that efficiency of OTA update can be improved, and unnecessary rollback operations can be reduced.

According to a first aspect, a processing method is provided. The method includes: obtaining an update sequence of a plurality of components and information about a mandatory matching relationship component set in an over the air OTA update process, where the plurality of components include a first component; and when the first component fails to be updated, based on the update sequence and the information about the mandatory matching relationship component set, updating at least a part of to-be-updated components and/or rolling back a part of successfully updated components, where an update ranking of the to-be-updated component is later than an update ranking of the first component, and an update ranking of the successfully updated component is earlier than the update ranking of the first component.

Optionally, the mandatory matching relationship component set includes one or more of a minimum human driving component set, a key unlocking and locking component set, an autonomous driving component set, and a cockpit domain component set.

Optionally, the information about the mandatory matching relationship set may be sent by a server to a transportation means, or may be stored in the transportation means.

In this embodiment of this application, in the OTA update process, if it is found that the first component fails to be updated, based on the update sequence of the components and the information about the mandatory matching relationship component set, the transportation means may update the at least a part of the to-be-updated components and/or roll back the part of the updated components. In this way, when the first component fails to be updated, the transportation means does not need to skip an update process of the to-be-updated component, and does not need to roll back all of the successfully updated components to a version before the update. In such a processing manner, efficiency of OTA update can be improved, and unnecessary rollback operations can be reduced.

With reference to the first aspect, in some implementations of the first aspect, the first component is not a component in the mandatory matching relationship component set, and when the first component fails to be updated, based on the update sequence and the information about the mandatory matching relationship component set, updating the at least a part of the to-be-updated components and/or rolling back the part of the successfully updated components includes: when the first component fails to be updated and the first component is not a last to-be-updated component in the plurality of components, updating all of the to-be-updated components based on the update sequence.

In this embodiment of this application, in the OTA update process, if the first component does not belong to the component in the mandatory matching relationship component set, and is not the last to-be-updated component, the transportation means may update all of the to-be-updated components based on the update sequence. In this way, when the first component fails to be updated, the transportation means does not need to skip or interrupt the update process of the to-be-updated component, thereby ensuring that the OTA update process is not affected by a failure in a single component.

With reference to the first aspect, in some implementations of the first aspect, the first component is a component in the mandatory matching relationship component set, and when the first component fails to be updated, based on the update sequence and the information about the mandatory matching relationship component set, updating the at least a part of the to-be-updated components and/or rolling back the part of the successfully updated components includes: when the first component fails to be updated and the successfully updated components include a component in the mandatory matching relationship component set, based on the update sequence, updating a component that is in the to-be-updated components and that is not in the mandatory matching relationship component set, and rolling back the component that is in the successfully updated components and that is in the mandatory matching relationship component set.

In this embodiment of this application, in the OTA update process, if the first component is the component in the mandatory matching relationship component set, and the first component fails to be updated, the transportation means may roll back only the component that is in the successfully updated components and that belongs to the component in the mandatory matching relationship component set, instead of rolling back all of the updated components. This targeted rollback strategy can make a rollback operation more accurate, and narrow a rollback range, thereby saving time and a resource for the OTA update. In addition, the transportation means may further continue to update the component that is in the to-be-updated components and that is not in the mandatory matching relationship component set, instead of skipping the update process of the to-be-updated component. In this way, the efficiency of the OTA update can be improved.

With reference to the first aspect, in some implementations of the first aspect, the mandatory matching relationship component set is a driving-related component set.

With reference to the first aspect, in some implementations of the first aspect, the method further includes: informing a user that a failure occurs in the OTA update process.

Optionally, the transportation means may send error prompt information on a display to inform that the failure occurs in the OTA update process, or the transportation means may remind the user that the failure occurs in the update by lighting up a corresponding abnormal status indicator on a dashboard, or the transportation means may play a sound alarm or an alert tone to indicate that the failure occurs in the OTA update process.

Optionally, the transportation means may further generate a detailed report or log record. The report or log includes specific information about the failure in the update, to help the user or technical support personnel further analyze and resolve a problem that the failure occurs in the OTA update.

With reference to the first aspect, in some implementations of the first aspect, the method further includes: skipping deleting a downloaded software package corresponding to a component that fails to be updated.

In this embodiment of this application, when the first component fails to be updated, the downloaded software package corresponding to the component that fails to be updated may not be deleted. In this way, after the user restarts the OTA update procedure, the time and the resource for the OTA update can be saved.

With reference to the first aspect, in some implementations of the first aspect, the method further includes: prompting the user to restart the OTA update process.

With reference to the first aspect, in some implementations of the first aspect, before rolling back the part of the successfully updated components based on the update sequence and the information about the mandatory matching relationship component set, the method further includes: rolling back the first component.

With reference to the first aspect, in some implementations of the first aspect, obtaining the update sequence of the plurality of components and the information about the mandatory matching relationship component set in the over the air OTA update process includes: receiving OTA update information sent by a server, where the OTA update information includes the update sequence of the plurality of components and the information about the mandatory matching relationship component set.

Optionally, the OTA update information may further include information indicating that a precise rollback switch is turned on. The transportation means may roll back the part of the successfully updated components based on the information indicating that the precise rollback switch is turned on, the update sequence of the plurality of components, and the information about the mandatory matching relationship component set.

Alternatively, in the foregoing implementation, if the OTA update information received by the transportation means includes information indicating that a precise rollback switch is turned off, the transportation means rolls back all of the updated components based on the information.

In this embodiment of this application, the transportation means may roll back a specific component in the successfully updated components in a targeted manner based on the indication in the OTA update information, and does not need to roll back all of the updated components. In such a precise rollback manner, a range of a rollback operation can be narrowed, a risk that a rollback failure occurs is reduced, and efficiency and stability of the OTA update process are improved.

According to a second aspect, a processing method is provided. The method includes: determining an update sequence of a plurality of components and information about a mandatory matching relationship component set in an OTA update process; and sending OTA update information to a transportation means, where the OTA update information includes the update sequence of the plurality of components and the information about the mandatory matching relationship component set.

According to a third aspect, a processing method is provided. The method includes: receiving OTA update failure information sent by a transportation means, where the OTA update failure information indicates that a failure occurs in a first component in an OTA update process; and sending a processing strategy to the transportation means based on an update sequence of a plurality of components and information about a mandatory matching relationship component set, where the processing strategy indicates the transportation means to update at least a part of to-be-updated components and/or roll back a part of successfully updated components, the plurality of components include the first component, an update ranking of the to-be-updated component is later than an update ranking of the first component, and an update ranking of the successfully updated component is earlier than the update ranking of the first component.

In this embodiment of this application, in a process in which the failure occurs in OTA update, a server configures the processing strategy, and the transportation means only needs to execute the processing strategy without performing additional computing and determining, thereby avoiding unnecessary energy consumption. Compared with performing a large amount of computing and decision-making on the transportation means, providing the processing strategy by the server can effectively reduce the energy consumption and prolong a battery life of the transportation means.

With reference to the third aspect, in some implementations of the third aspect, when the first component is not a component in the mandatory matching relationship component set, and the first component is not a last to-be-updated component in the plurality of components, the processing strategy indicates the transportation means to update all of the to-be-updated components.

With reference to the third aspect, in some implementations of the third aspect, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set.

According to a fourth aspect, a processing method is provided. The method includes: sending OTA update failure information to a server, where the OTA update failure information indicates that a failure occurs in a first component in an OTA update process; receiving a processing strategy sent by the server, where the processing strategy indicates a transportation means to update at least a part of to-be-updated components and/or roll back a part of successfully updated components, a plurality of components include the first component, an update ranking of the to-be-updated component is later than an update ranking of the first component, and an update ranking of the successfully updated component is earlier than the update ranking of the first component; and according to the processing strategy, updating the at least a part of the to-be-updated components and/or rolling back the part of the successfully updated components.

In this embodiment of this application, in a process in which the failure occurs in OTA update, the server configures the processing strategy, and the transportation means only needs to execute the processing strategy without performing additional computing and determining, thereby avoiding unnecessary energy consumption. Compared with performing a large amount of computing and decision-making on the transportation means, providing the processing strategy by the server can effectively reduce the energy consumption and prolong a battery life of the transportation means.

With reference to the fourth aspect, in some implementations of the fourth aspect, when the first component is not a component in a mandatory matching relationship component set, and the first component is not a last to-be-updated component in the plurality of components, the processing strategy indicates the transportation means to update all of the to-be-updated components; and according to the processing strategy, updating the at least a part of the to-be-updated components and/or rolling back the part of the successfully updated components includes: updating all of the to-be-updated components according to the processing strategy.

With reference to the fourth aspect, in some implementations of the fourth aspect, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set; and according to the processing strategy, updating the at least a part of the to-be-updated components and/or rolling back the part of the successfully updated components includes: updating the component that is in the to-be-updated components and that is not in the mandatory matching relationship component set, and rolling back the component that is in the successfully updated components and that is in the mandatory matching relationship component set.

According to a fifth aspect, a processing apparatus is provided. The apparatus includes: an obtaining unit, configured to obtain an update sequence of a plurality of components and information about a mandatory matching relationship component set in an over the air OTA update process, where the plurality of components include a first component; and a processing unit, configured to: when the first component fails to be updated, based on the update sequence and the information about the mandatory matching relationship component set, update at least a part of to-be-updated components and/or roll back a part of successfully updated components, where an update ranking of the to-be-updated component is later than an update ranking of the first component, and an update ranking of the successfully updated component is earlier than the update ranking of the first component.

With reference to the fifth aspect, in some implementations of the fifth aspect, the first component is not a component in the mandatory matching relationship component set; and
the processing unit is specifically configured to: when the first component fails to be updated and the first component is not a last to-be-updated component in the plurality of components, update all of the to-be-updated components based on the update sequence.

With reference to the fifth aspect, in some implementations of the fifth aspect, the first component is a component in the mandatory matching relationship component set; and the processing unit is specifically configured to: when the first component fails to be updated and the successfully updated components include a component in the mandatory matching relationship component set, based on the update sequence, update a component that is in the to-be-updated components and that is not in the mandatory matching relationship component set, and roll back the component that is in the successfully updated components and that is in the mandatory matching relationship component set.

With reference to the fifth aspect, in some implementations of the fifth aspect, the mandatory matching relationship component set is a driving-related component set.

With reference to the fifth aspect, in some implementations of the fifth aspect, the processing unit is further configured to inform a user that a failure occurs in the OTA update process.

With reference to the fifth aspect, in some implementations of the fifth aspect, the processing unit is further configured to skip deleting a downloaded software package corresponding to a component that fails to be updated.

With reference to the fifth aspect, in some implementations of the fifth aspect, the processing unit is further configured to prompt the user to restart the OTA update process.

With reference to the fifth aspect, in some implementations of the fifth aspect, the processing unit is further configured to roll back the first component.

With reference to the fifth aspect, in some implementations of the fifth aspect, the apparatus further includes: a transceiver unit, where the transceiver unit is configured to receive OTA update information sent by a server, where the OTA update information includes the update sequence of the plurality of components and the information about the mandatory matching relationship component set.

According to a sixth aspect, a processing apparatus is provided. The apparatus includes: a transceiver unit, where the transceiver unit is configured to receive OTA update information sent by a server, where the OTA update information includes an update sequence of a plurality of components and information about a mandatory matching relationship component set.

According to a seventh aspect, a processing apparatus is provided. The apparatus includes: a transceiver unit, configured to receive OTA update failure information sent by a transportation means, where the OTA update failure information indicates that a failure occurs in a first component in an OTA update process; and a processing unit, configured to send a processing strategy to the transportation means based on an update sequence of a plurality of components and information about a mandatory matching relationship component set, where the processing strategy indicates the transportation means to update at least a part of to-be-updated components and/or roll back a part of successfully updated components, the plurality of components include the first component, an update ranking of the to-be-updated component is later than an update ranking of the first component, and an update ranking of the successfully updated component is earlier than the update ranking of the first component.

With reference to the seventh aspect, in some implementations of the seventh aspect, when the first component is not a component in the mandatory matching relationship component set, and the first component is not a last to-be-updated component in the plurality of components, the processing strategy indicates the transportation means to update all of the to-be-updated components.

With reference to the seventh aspect, in some implementations of the seventh aspect, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set.

According to an eighth aspect, a processing apparatus is provided. The apparatus includes: a transceiver unit, configured to: send OTA update failure information to a server, where the OTA update failure information indicates that a failure occurs in a first component in an OTA update process, and receive a processing strategy sent by the server, where the processing strategy indicates a transportation means to update at least a part of to-be-updated components and/or roll back a part of successfully updated components, a plurality of components include the first component, an update ranking of the to-be-updated component is later than an update ranking of the first component, and an update ranking of the successfully updated component is earlier than the update ranking of the first component; and a processing unit, configured to: according to the processing strategy, update the at least a part of the to-be-updated components and/or roll back the part of the successfully updated components.

With reference to the eighth aspect, in some implementations of the eighth aspect, when the first component is not a component in a mandatory matching relationship component set, and the first component is not a last to-be-updated component in the plurality of components, the processing strategy indicates the transportation means to update all of the to-be-updated components; and the processing unit is specifically configured to update all of the to-be-updated components according to the processing strategy.

With reference to the eighth aspect, in some implementations of the eighth aspect, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set; and the processing unit is specifically configured to: update the component that is in the to-be-updated components and that is not in the mandatory matching relationship component set, and roll back the component that is in the successfully updated components and that is in the mandatory matching relationship component set.

According to a ninth aspect, a processing apparatus is provided, including at least one processor and a memory. The at least one processor is coupled to the memory, and is configured to read and execute instructions in the memory, to enable the apparatus to implement the method according to any one of the implementations of the first aspect to the fourth aspect.

According to a tenth aspect, a computer-readable storage medium is provided. The computer-readable storage medium stores program code, and when the computer program code is run on a computer, the computer is enabled to perform the method according to any one of the implementations of the first aspect to the fourth aspect.

According to an eleventh aspect, a chip is provided. The chip includes a circuit, and the circuit is configured to perform the method according to any one of the implementations of the first aspect to the fourth aspect.

According to a twelfth aspect, a computer program product is provided. The computer product includes a computer program, and when the computer program is run, a computer is enabled to perform the method according to any one of the implementations of the first aspect to the fourth aspect.

According to a thirteenth aspect, a transportation means is provided, including the processing apparatus according to any one of the implementations of the fifth aspect or the eighth aspect.

According to a fourteenth aspect, a server is provided, including the processing apparatus according to any one of the implementations of the sixth aspect or the seventh aspect.

### BRIEF DESCRIPTION OF DRAWINGS

FIG. 1 is a functional diagram of a transportation means according to an embodiment of this application;
FIG. 2 shows a system architecture to which a processing method according to an embodiment of this application is applicable;
FIG. 3 is a schematic flowchart of a processing method according to an embodiment of this application;
FIG. 4A and FIG. 4B are a schematic flowchart of another processing method according to an embodiment of this application;

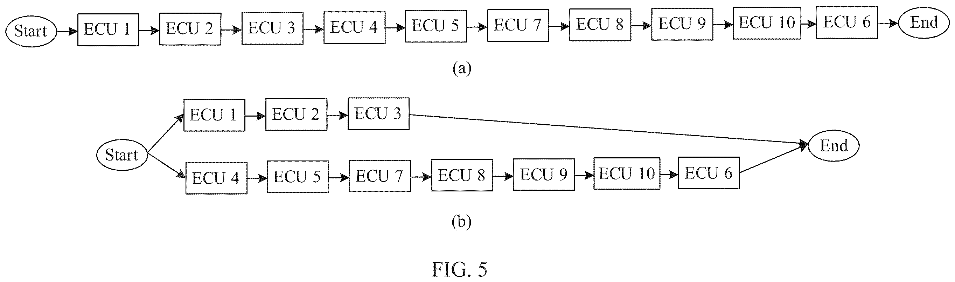

FIG. 5 is a diagram of component update sequence configuration according to an embodiment of this application;
FIG. 6 is another diagram of component update sequence configuration according to an embodiment of this application;
FIG. 7(a) to FIG. 7(d) are a diagram of a scenario to which a processing method according to an embodiment of this application is applicable;
FIG. 8 shows a processing apparatus according to an embodiment of this application; and
FIG. 9 shows another processing apparatus according to an embodiment of this application.

### DESCRIPTION OF EMBODIMENTS

In descriptions of embodiments of this application, unless otherwise specified, "/" means "or". For example, A/B may indicate A or B. A term "and/or" in this specification is merely an association relationship for describing associated objects, and indicates that three relationships may exist. For example, A and/or B may indicate the following three cases: Only A exists, both A and B exist, and only B exists. In this application, "at least one" means one or more, and "a plurality of" means two or more. At least one of the following items (pieces) or a similar expression thereof indicates any combination of these items, including a single item (piece) or any combination of a plurality of items (pieces). For example, at least one item (piece) of a, b, or c may indicate a, b, c, a and b, a and c, b and c, or a, b, and c, where a, b, and c may be singular or plural.

Prefix words "first", "second", and the like in embodiments of this application are merely intended to distinguish between different objects, and impose no limitation on locations, sequences, priorities, quantities, content, or the like of the described objects. Use of prefix words such as ordinal numbers used to distinguish the described objects in embodiments of this application does not constitute a limitation on the described objects. For descriptions of the described objects, refer to the context descriptions in the claims or embodiments. The use of such prefix words should not constitute a redundant limitation.

The following describes technical solutions of embodiments of this application with reference to accompanying drawings.

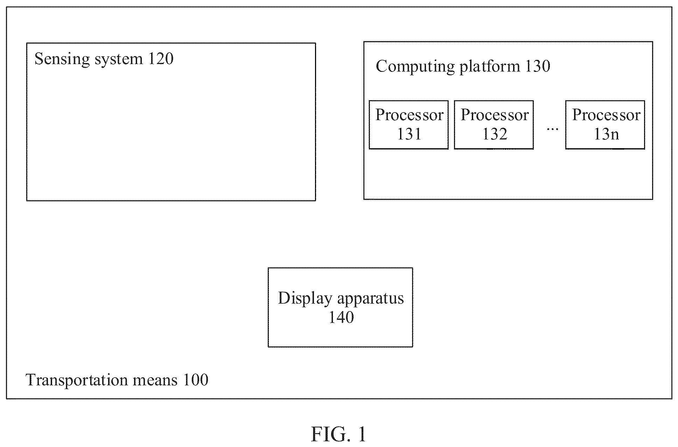

FIG. 1 is a functional diagram of a transportation means 100 according to an embodiment of this application. It should be understood that FIG. 1 and related descriptions are merely examples, and do not limit the transportation means in embodiments of this application.

The transportation means 100 may include a plurality of subsystems, for example, a sensing system 120 and a computing platform 130. Optionally, the transportation means 100 may include more or fewer subsystems, and each subsystem may include one or more components. In addition, all the subsystems and components of the transportation means 100 may be interconnected in a wired or wireless manner.

The sensing system 120 may include several types of sensors configured to sense information about an ambient environment of the transportation means 100. For example, the sensing system 120 may include a positioning system. The positioning system may be a global positioning system (global positioning system, GPS), a BeiDou system, or another positioning system. The sensing system 120 may include one or more of an inertial measurement unit (inertial measurement unit, IMU), a lidar, a millimeter wave radar, an ultrasonic radar, and a camera apparatus.

Some or all functions of the transportation means 100 may be controlled by the computing platform 130. The computing platform 130 may include processors 131 to 13n (n is a positive integer). The processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement configuration of the hardware circuit may be understood as a process in which the processor loads instructions to implement functions of some or all of the units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory, to implement a corresponding function.

The computing platform 130 may control the functions of the transportation means 100 based on inputs received from the subsystems (for example, the sensing system 120). For example, the computing platform 130 may control the transportation means to perform OTA update based on an input received from the sensing system 120. In some embodiments, the computing platform 130 may be configured to control many aspects of the transportation means 100 and the subsystems of the transportation means.

A display apparatus 140 may be configured to display an OTA update progress. When a failure occurs in an OTA update process, the display apparatus may be configured to remind a user.

Optionally, the foregoing components are merely examples. In actual application, components in the foregoing modules may be added or deleted based on an actual requirement. FIG. 1 should not be understood as a limitation on embodiments of this application.

The transportation means 100 in this application may include a land transportation means, a water transportation means, an air transportation means, an industrial device, an agricultural device, an entertainment device, or the like. For example, the transportation means 100 may be a vehicle. The vehicle is a vehicle in a broad sense, and may be a transportation means (for example, a commercial vehicle, a passenger vehicle, a motorcycle, a flight vehicle, or a train), an industrial vehicle (for example, a pallet truck, a trailer, or a tractor), an engineering vehicle (for example, an excavator, a bulldozer, or a crane), an agricultural device (for example, a lawn mower or a harvester), an entertainment device, or a toy vehicle. A type of the vehicle is not specifically limited in embodiments of this application. For another example, the transportation means 100 may be a transportation means like an aircraft or a ship.

The following uses an example in which the transportation means 100 is a vehicle, to describe a technical problem that needs to be resolved in this application and the technical solutions used in this application.

As intelligent vehicles are widely used in daily life, users expect that the intelligent vehicles and related devices can bring more comfortable intelligent experience. Against such a background, OTA gradually becomes an indispensable basic function of the intelligent vehicle. Vehicle OTA may mean that a software package is pushed from a cloud to a vehicle, and functions such as software installation and/or update are completed on the vehicle. The over the air technology is used, so that a new function can be added to the vehicle or an existing function of the vehicle can be optimized, thereby greatly enriching the intelligent experience of the user.

Each intelligent vehicle may include dozens or even hundreds of electronic control units (electronic control units, ECUs). Therefore, some ECUs may fail to be updated in an OTA update process. When some ECUs fail to be updated, a current processing strategy is that the vehicle may trigger vehicle rollback. In other words, a failure in any component causes the vehicle to roll back successfully updated components to a version before the update. However, in such a processing manner, there may be a risk of a failure in a rollback procedure, and this results in a decrease in an update success rate of an OTA update task; and in addition, the vehicle may perform an unnecessary rollback operation, and this makes overall OTA update time-consuming and highly complex.

Embodiments of this application provide a processing method and apparatus, and a transportation means, so that efficiency of OTA update can be improved, and unnecessary rollback operations can be reduced.

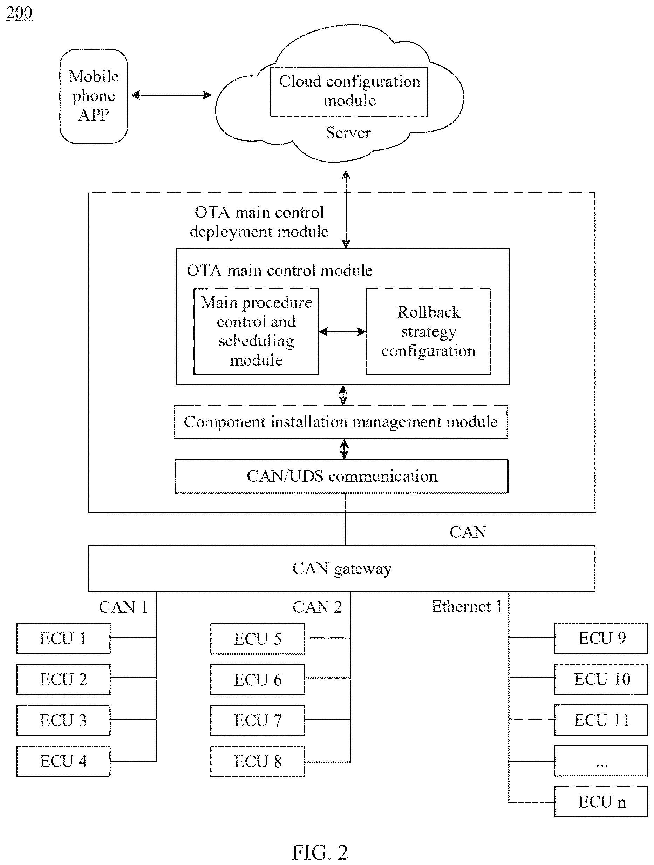

FIG. 2 shows a system architecture to which a processing method according to an embodiment of this application is applicable.

As shown in FIG. 2, the architecture 200 may include a server, a mobile phone, an OTA main control deployment module, and a controller area network (controller area network, CAN) gateway.

The server may include a cloud configuration module, and the cloud configuration module may support at least one of the following content: update sequence configuration of all ECUs of a vehicle, configuration of a vehicle rollback or precise rollback strategy, configuration of one or more mandatory matching relationship component sets, and communication between the server and an OTA main control module of the vehicle over a mobile communication network (for example, 2G/3G/4G/5G). The mobile phone and the server may also communicate with each other over the mobile communication network. For example, the server may obtain OTA update progress and update result information from the OTA main control module, and push the information to the mobile phone over the mobile communication network. A user may use the mobile phone to view the OTA update progress and result of the vehicle at any time.

The OTA main control deployment module may include the OTA main control module, a component installation management module, and a CAN/unified diagnostic service (unified diagnostic service, UDS) module.

The OTA main control module may include a rollback strategy configuration module and a main procedure control and scheduling module. The rollback strategy configuration module may communicate with the OTA server, and request to download and save rollback strategy configuration. In addition, the rollback strategy configuration module may interact with the main procedure control and scheduling module, and provide rollback strategy access. The main procedure control and scheduling module may schedule an OTA procedure based on an update component list and update sequence configuration that are delivered by the server. The main procedure control and scheduling module may further implement a precise rollback rule. When a failure occurs in the OTA update, the main procedure control and scheduling module may request the rollback strategy configuration module to query a mandatory matching relationship component set, and perform a subsequent update action according to the precise rollback rule. For example, if the main procedure control and scheduling module determines that a component that fails to be updated is in a first component set, the main procedure control and scheduling module may skip a remaining component that is in the set and that is not updated, and roll back a successfully updated component in the set. On the contrary, the main procedure control and scheduling module may continue to control component update based on the OTA update sequence. The component installation management module may be configured to coordinate update of a plurality of components on the vehicle and analyze impact of a component update exception. The CAN/unified diagnostic service (unified diagnostic service, UDS) communication module may be configured to communicate with the CAN gateway. The CAN gateway may be a core component in an electrical and electronics architecture of the vehicle, and may be used as a data exchange hub of the vehicle. The OTA main control deployment module may control update of related components (for example, an ECU 1 to an ECU n) through the CAN gateway. Optionally, the first component set may be a mandatory matching component relationship set.

In this embodiment of this application, the server may be deployed on an electronic device having a communication function and a storage function, or may be deployed on a virtual machine on a cloud.

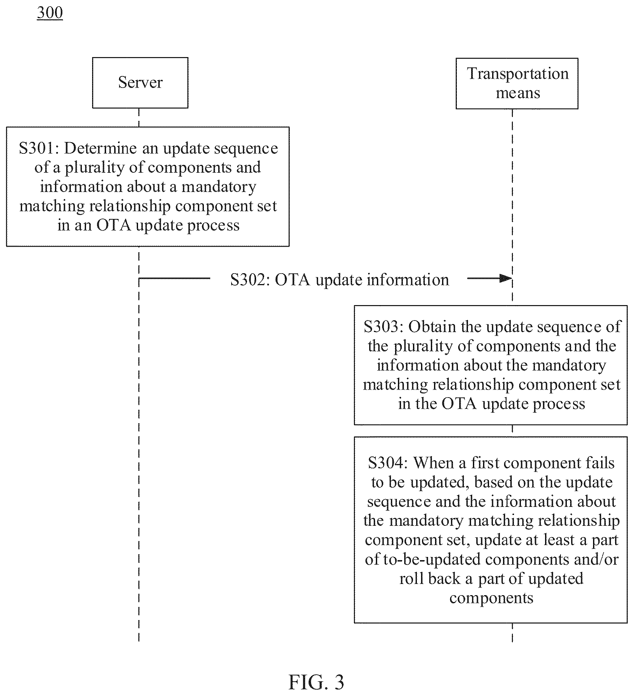

FIG. 3 is a schematic flowchart of a processing method according to an embodiment of this application. The method 300 may include step S301 to step S304.

S301: A server determines an update sequence of a plurality of components and information about a mandatory matching relationship component set in an OTA update process.

S302: The server sends OTA update information to a transportation means.

The OTA update information includes the update sequence of the plurality of components and the information about the mandatory matching relationship component set.

Optionally, the mandatory matching relationship component set may include one or more of a minimum human driving component set, a key unlocking and locking component set, an autonomous driving component set, and a cockpit domain component set. The minimum human driving component set may be understood as a component set of a minimum range required when a driver drives a vehicle. The autonomous driving component set may be understood as a component set required when the transportation means performs autonomous driving.

Optionally, the mandatory matching relationship component set is a driving-related component set.

Optionally, the OTA update information may further include: status information of a precise rollback switch. To be specific, when the precise rollback switch is turned on, the transportation means may execute a precise rollback strategy when a component fails to be updated. When the precise rollback switch is turned off, the transportation means may execute a vehicle rollback strategy when the component fails to be updated.

S303: The transportation means obtains the update sequence of the plurality of components and the information about the mandatory matching relationship component set in the OTA update process.

The plurality of components include a first component.

Optionally, step S301 and step S302 may not be performed in the method 300. In this case, the transportation means may configure the update sequence of the plurality of components and the information about the mandatory matching relationship component set.

S304: When the first component fails to be updated, based on the update sequence and the information about the mandatory matching relationship component set, the transportation means updates at least a part of to-be-updated components and/or rolls back a part of successfully updated components.

An update ranking of the to-be-updated component is later than an update ranking of the first component, and an update ranking of the successfully updated component is earlier than the update ranking of the first component.

Optionally, before step S304, the method 300 further includes: rolling back the first component.

Alternatively, if the precise rollback switch in the OTA update information is turned off in step S302, in step S304, the transportation means may stop updating the to-be-updated component, and/or roll back all of the successfully updated components.

In this embodiment of this application, in the OTA update process, if it is found that the first component fails to be updated, based on the update sequence of the components and the information about the mandatory matching relationship component set, the transportation means may update the at least a part of the to-be-updated components and/or roll back the part of the updated components. In this way, when the first component fails to be updated, the transportation means does not need to skip an update process of the to-be-updated component, and does not need to roll back all of the successfully updated components to a version before the update. In such a processing manner, efficiency of OTA update can be improved, and unnecessary rollback operations can be reduced.

In step S304, the transportation means may determine whether the first component belongs to the mandatory matching relationship component set, to select different component update and/or component rollback strategies.

In an embodiment, when the transportation means determines that the first component is not a component in the mandatory matching relationship component set, and the first component fails to be updated and the first component is not a last to-be-updated component in the plurality of components, the transportation means may update all of the to-be-updated components based on the update sequence. In this way, when the first component fails to be updated, the transportation means does not need to skip or interrupt the update process of the to-be-updated component, thereby ensuring that the OTA update process is not affected by a failure in a single component.

In an embodiment, when the transportation means determines that the first component is a component in the mandatory matching relationship component set, and the first component fails to be updated and the successfully updated components include a component in the mandatory matching relationship component set, based on the update sequence, the transportation means may update a component that is in the to-be-updated components and that is not in the mandatory matching relationship component set, and roll back the component that is in the successfully updated components and that is in the mandatory matching relationship component set. This targeted rollback strategy can make a rollback operation more accurate, and narrow a rollback range, thereby saving time and a resource for the OTA update. In addition, the transportation means may further continue to update the component that is in the to-be-updated components and that is not in the mandatory matching relationship component set, instead of skipping the update process of the to-be-updated component. In this way, the efficiency of the OTA update can be improved.

After step S304, the transportation means may further inform a user that a failure occurs in the OTA update process.

Optionally, the transportation means may send error prompt information on a display to inform that the failure occurs in the OTA update process, or the transportation means may inform the user that the failure occurs in the update by lighting up a corresponding abnormal status indicator on a dashboard, or the transportation means may play a sound alarm or an alert tone to indicate that the failure occurs in the OTA update process.

Optionally, the transportation means may further generate a detailed report or log record. The report or log may include specific information about the failure in the update, to help the user or technical support personnel further analyze and resolve a problem that the failure occurs in the OTA update.

After step S304, the transportation means may not delete a downloaded software package corresponding to a component that fails to be updated. In this way, after the user restarts the OTA update procedure, the time and the resource for the OTA update can be saved.

After step S304, the transportation means may further prompt the user to restart the OTA update process.

In an embodiment, in step S302, the OTA update information sent by the server to the transportation means may include only the update sequence of the plurality of components. In this case, step S303 may be replaced with: The transportation means obtains the update sequence of the plurality of components and performs update based on the update sequence. Step S304 may be replaced with: When the transportation means finds that the first component fails to be updated, the transportation means may send OTA update failure information to the server, where the OTA update failure information indicates that a failure occurs in the first component.

After receiving the OTA update failure information, the server may send a processing strategy to the transportation means based on the update sequence of the plurality of components and the information about the mandatory matching relationship component set, where the processing strategy indicates the transportation means to update the at least a part of the to-be-updated components and/or roll back the part of the successfully updated components. After receiving the processing strategy, the transportation means may update the at least a part of the to-be-updated components and/or roll back the part of the successfully updated components. In this way, in a process in which the failure occurs in the OTA update, the server configures the processing strategy, and the transportation means only needs to execute the processing strategy without performing additional computing and determining, thereby avoiding unnecessary energy consumption. Compared with performing a large amount of computing and decision-making on the transportation means, providing the processing strategy by the server can effectively reduce the energy consumption and prolong a battery life of the transportation means.

Optionally, when the first component is not a component in the mandatory matching relationship component set, and the first component is not a last to-be-updated component in the plurality of components, the processing strategy may indicate the transportation means to update all of the to-be-updated components.

Optionally, when the first component is a component in the mandatory matching relationship component set, the processing strategy may indicate the transportation means to update a component that is in the to-be-updated components and that is not in the mandatory matching relationship component set, and roll back a component that is in the successfully updated components and that is in the mandatory matching relationship component set.

It should be understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

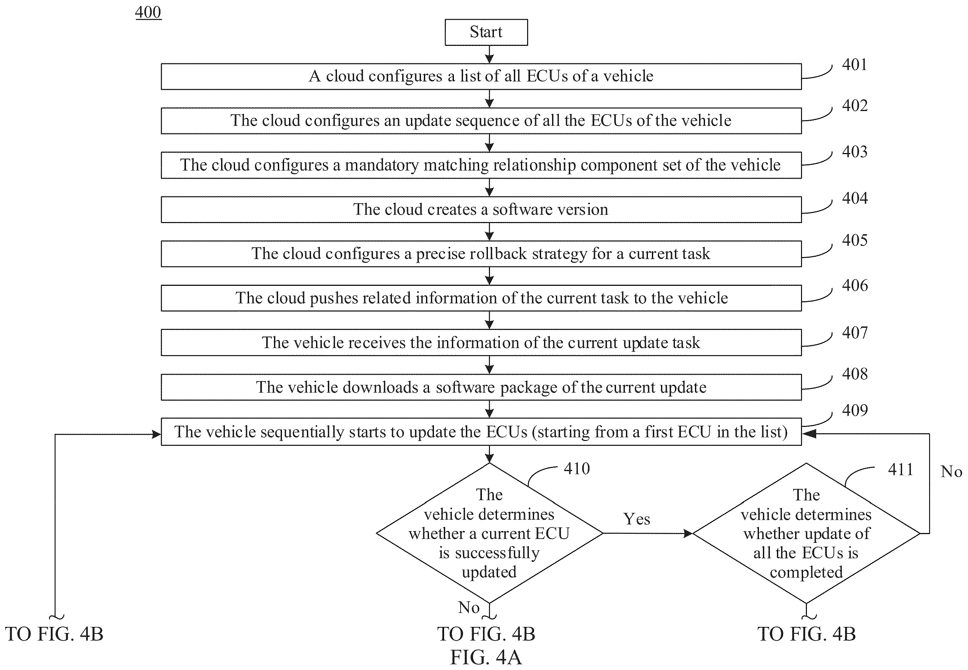

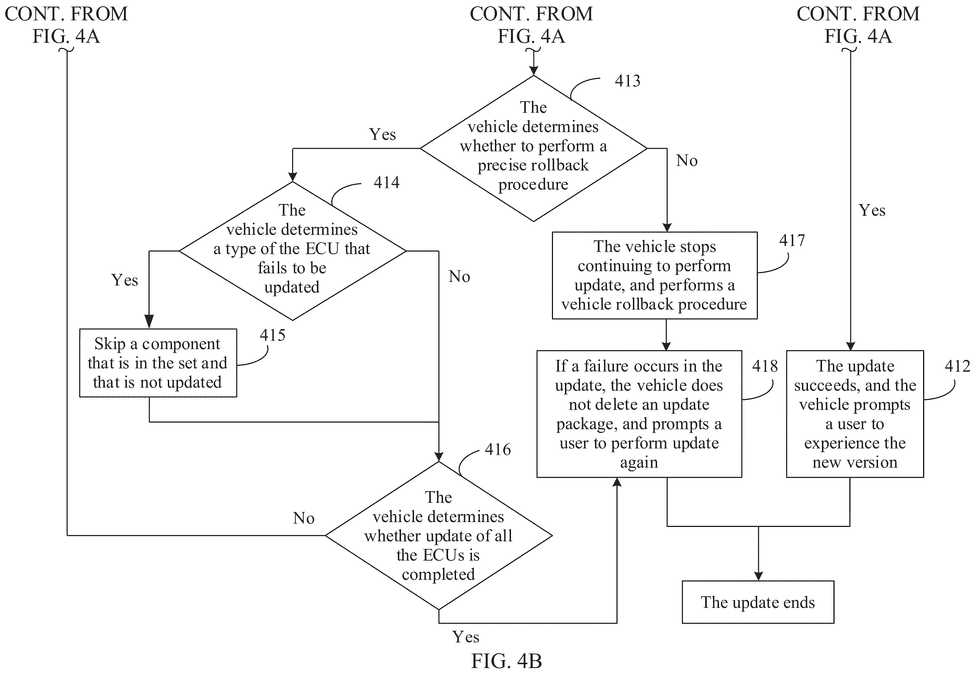

FIG. 4A and FIG. 4B are a schematic flowchart of another processing method according to an embodiment of this application. The method 400 may specifically describe steps S301 to S304 in the method 300. The following describes the method 400 by using an example in which a transportation means is a vehicle.

S401: A cloud configures a list of all ECUs of the vehicle.

The cloud may be the server in the architecture 200 and the method 300.

For example, the list of all ECUs of the vehicle may include an ECU 1 to an ECU n, where n is a positive integer.

S402: The cloud configures an update sequence of all the ECUs of the vehicle.

Optionally, the cloud may configure a serial update sequence of the ECUs. For example, the ECU list includes an ECU 1 to an ECU 10, and the cloud may configure an update sequence of the 10 ECUs in a manner shown in (a) in FIG. 4A and FIG. 4B.

Optionally, the cloud may configure a parallel update sequence of the ECUs. For example, the ECU list includes an ECU 1 to an ECU 10, and the cloud may configure an update sequence of the 10 ECUs in a manner shown in (b) in FIG. 4A and FIG. 4B. In other words, the ECU 1 and the ECU 4, the ECU 2 and the ECU 5, and the ECU 3 and the ECU 7 can be simultaneously updated.

S403: The cloud configures a mandatory matching relationship component set of the vehicle.

For example, one or more mandatory matching relationship component sets may be defined in the ECU list, for example, a minimum human driving component set, a key unlocking and locking component set, an autonomous driving component set, and a cockpit domain component set. A component that meets the set classification may be classified into the one or more sets, and a component that does not meet the set classification may be classified into a loose mapping relationship component set.

For example, the ECU list includes an ECU 1 to an ECU 10. The ECU 1 to the ECU 3 are unlocking- and locking-related components, the ECU 4 and the ECU 5 are cockpit domain-related components, and the ECU 7 to the ECU 10 are components that do not meet any mandatory matching relationship component set classification. Therefore, the ECU 1 to the ECU 3 may be classified into the key unlocking and locking component set, the ECU 4 and the ECU 5 may be classified into the cockpit domain component set, and the ECU 7 to the ECU 10 may be classified into the loose mapping relationship component set.

Optionally, when one component belongs to a plurality of mandatory matching relationship component sets, the plurality of mandatory matching relationship component sets may be combined into one set.

For example, the ECU list includes an ECU 1 to an ECU 5. The ECU 1 to the ECU 3 are unlocking- and locking-related components, the ECU 3 to the ECU 5 are cockpit domain-related components, and the ECU 3 belongs to both the key unlocking and locking component set and the cockpit domain component set. Therefore, the key unlocking and locking component set and the cockpit domain component set may be combined into one set.

For example, when the mandatory matching relationship component set is defined in the ECU list, the mandatory matching relationship component set may be classified from perspectives such as driving safety, whether the vehicle can be normally used, and whether a basic function of the vehicle is normal. Specific classification examples may be shown in Table 1.

**Table 1**

| Mandatory matching component set | Network segment | Controller | Whether high voltage can be applied | Whether driving is supported | Function failed |
|---|---|---|---|---|---|
| 1. Minimum human driving component set | Power domain | Vehicle control unit VCU | No | No | Low-voltage power supply is abnormal, and a system fault indicator is on |
| 1. Minimum human driving component set | Power domain | | GSM | No | Gear shifting and driving are not supported |
| 1. Minimum human driving component set | Chassis domain | Intelligent braking system iBooster | Yes | No | There is no braking assistance |
| 2. Key unlocking and locking component set | Vehicle body domain | Bluetooth low energy BLE | Yes | Yes | A Bluetooth key unlocking function fails |
| 2. Key unlocking and locking component set | Vehicle body domain | Near field communication unlocking NFC PE | Yes | Yes | An NFC unlocking function fails |
| 3. Minimum autonomous driving component set | Chassis domain | Automatic parking assist APA | Yes | Yes | Manual driving is not affected, and an automatic parking function fails |
| 3. Minimum autonomous driving component set | Chassis domain | Model predictive control MPC | Yes | Yes | Manual driving is not affected, and an autonomous driving function fails |
| 4. Cockpit domain component set | INFO domain | In-vehicle infotainment IVI system | Yes | Yes | A central control large screen is black |
| 4. Cockpit domain component set | INFO domain | Integrated circuit IC | Yes | Yes | A screen of a dashboard is black |
| 5. Loose mapping component set | Power domain | On-board charger OBC | Yes | Yes | An alternating current/direct current charge/discharge function fails |
| 5. Loose mapping component set | Power domain | Speed limit device SLD | Yes | Yes | Only a gear indicator on an auxiliary dashboard is on, OTA is not supported, and only flashing of a diagnosis instrument is supported |

S404: The cloud creates a software version.

For example, the ECU list includes an ECU 1, an ECU 2, an ECU 3, an ECU 6, an ECU 7, an ECU 8, and an ECU 10, and a new version to which the vehicle is updated is V2.0. In this case, version numbers corresponding to the components may be shown in Table 2.

**Table 2**

| Component | Version |
|---|---|
| ECU 1 | V2.0 |
| ECU 2 | V2.0 |
| ECU 3 | V2.0 |
| ECU 6 | V2.0 |
| ECU 7 | V2.0 |
| ECU 8 | V2.0 |
| ECU 10 | V2.0 |

S405: The cloud configures a precise rollback strategy for a current task.

Optionally, the cloud may form the final precise rollback strategy based on the mandatory matching relationship component set obtained through classification in step S403.

Optionally, the cloud may adjust the mandatory matching component set based on a feature of the current OTA update task, and form the final precise rollback strategy based on an adjusted mandatory matching relationship component set.

It should be understood that the precise rollback strategy may be the strategy of updating the at least a part of the to-be-updated components and/or rolling back the part of the successfully updated components in the method 300.

S406: The cloud pushes related information of the current task to the vehicle.

Optionally, the related information of the current task may include at least one of the following content: the update sequence of the vehicle, the mandatory matching relationship component set, a precise rollback switch, and new version information (for example, the information shown in Table 2) to be updated by the vehicle.

The precise rollback switch may be indicated by the status information of the precise rollback switch in the method 300. To be specific, when the precise rollback switch is turned on, the vehicle may execute the precise rollback strategy when a component fails to be updated. When the precise rollback switch is turned off, the vehicle may execute the vehicle rollback strategy when the component fails to be updated. In addition, a specific form of the precise rollback switch may be adjusted by an operator based on an actual requirement.

S407: The vehicle receives the related information of the current update task.

For example, when the related information of the current task includes the mandatory matching relationship component set, the vehicle may store the mandatory matching relationship component set in a rollback strategy configuration module.

S408: The vehicle downloads a software package of the current update.

S409: The vehicle sequentially starts to update the ECUs (starting from a first ECU in the list).

Specifically, when the vehicle starts to update the ECUs, an OTA main control module in the vehicle may obtain a subset from the update sequence of all the ECUs in the vehicle based on the update components delivered by the cloud, and start to update the components one by one based on the new update sequence subset.

For example, when a component fails to be updated, the OTA main control module may request the rollback strategy configuration module to query the mandatory matching relationship component set, and perform a subsequent update action according to a precise rollback rule. In other words, if the component that fails to be updated belongs to the mandatory matching relationship component set, an update process of a remaining component that is in the set and that is not updated may be skipped, and a component that is successfully updated may be rolled back. If the component that fails to be updated is in the loose mapping relationship component set, update may continue to be performed based on the update sequence of the component.

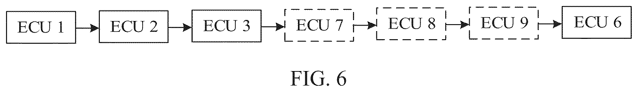

For example, as shown in FIG. 6, a component in a solid-line block is a component in the mandatory matching relationship component set, and a component in a dashed-line block may be a component in the loose mapping relationship component set.

Scenario 1: If a failure occurs in an ECU 1 during OTA update, because the ECU 1, an ECU 2, an ECU 3, and an ECU 6 all belong to the mandatory matching relationship component set, update of the ECU 2, the ECU 3, and the ECU 6 may be skipped in this case, an ECU 7, an ECU 8, and an ECU 9 are updated in sequence, and the ECU 1 is rolled back.

Scenario 2: If a failure occurs in the ECU 3 during the OTA update, the components of the ECU 7, the ECU 8, and the ECU 9 may continue to be updated in sequence, update of the ECU 6 is skipped, and the ECU 3, the ECU 2, and the ECU 1 are rolled back in sequence.

Scenario 3: If a failure occurs in the ECU 7 during the OTA update, because the ECU 7, the ECU 8, and the ECU 9 all belong to the loose mapping relationship component set, the components of the ECU 8 and the ECU 9 may continue to be updated in sequence, finally the ECU 6 is updated, and the ECU 7 is rolled back.

Scenario 4: If a failure occurs in the ECU 6 during the OTA update, the ECU 6, the ECU 3, the ECU 2, and the ECU 1 are rolled back in sequence.

In the four scenarios, if a specific component is not updated to a latest version, the update task fails. However, the software package downloaded by the vehicle is not deleted, and the software package is still stored in the vehicle. In addition, the vehicle may remind a user that the update task fails, and remind the user that the update procedure may be started again. When the vehicle detects that the user starts the update procedure again, the vehicle only needs to re-update a component that fails to be updated last time.

In the four scenarios, the components are re-updated in the following sequence:
Scenario 1: The ECU 1, the ECU 2, the ECU 3, and the ECU 6 are updated in sequence.
Scenario 2: The ECU 1, the ECU 2, the ECU 3, and the ECU 6 are updated in sequence.
Scenario 3: Only the ECU 7 needs to be updated.
Scenario 4: The ECU 1, the ECU 2, the ECU 3, and the ECU 6 are updated in sequence.

S410: The vehicle determines whether a current ECU is successfully updated.

If the vehicle determines that the OTA update succeeds, step S411 may be performed; otherwise, the vehicle may perform step S413.

S411: The vehicle determines whether update of all the ECUs is completed.

If the vehicle determines that the OTA update is completed, step S412 may be performed; otherwise, the vehicle may perform step S409 again.

S412: The update succeeds, and the vehicle prompts the user to experience the new version.

Optionally, the vehicle may remind the user that the OTA update succeeds by playing an alert tone, displaying prompt information on a display, or playing voice, to ask the user to experience the new version.

S413: The vehicle determines whether to perform a precise rollback procedure.

If the vehicle determines that the precise rollback procedure needs to be performed, step S414 may be performed; otherwise, step S417 may be performed.

S414: The vehicle determines a type of the ECU that fails to be updated.

If the vehicle determines that the component that fails to be updated is a component in the mandatory matching relationship component set, the vehicle may perform step S415; otherwise, the vehicle may perform step S416.

S415: The vehicle skips a component that is in the set and that is not updated.

S416: The vehicle determines whether update of all the ECUs is completed.

If the vehicle determines that the OTA update is completed, step S418 may be performed; otherwise, the vehicle may perform step S409 again.

S417: The vehicle stops continuing to perform update, and performs a vehicle rollback procedure.

S418: In a process of performing vehicle rollback, if a failure occurs, the vehicle does not delete an update package, and reminds the user to perform OTA update again.

In this embodiment of this application, when the failure occurs in the OTA update, the vehicle may roll back a part of components according to the precise rollback rule configured on the cloud. In this way, there is no need to roll back all of the successfully updated components to a version before the update. Efficiency of the OTA update can be improved, and unnecessary rollback operations can be reduced.

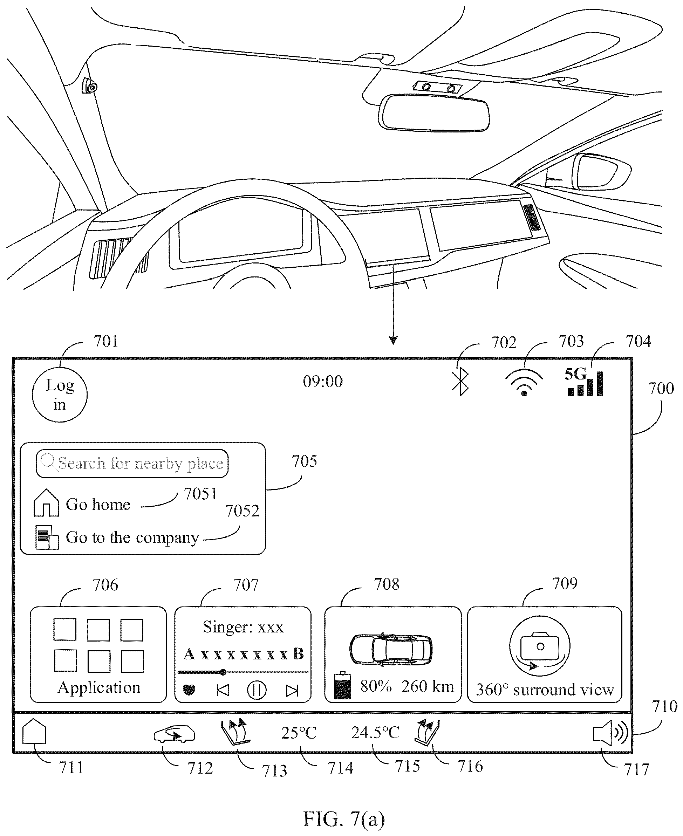

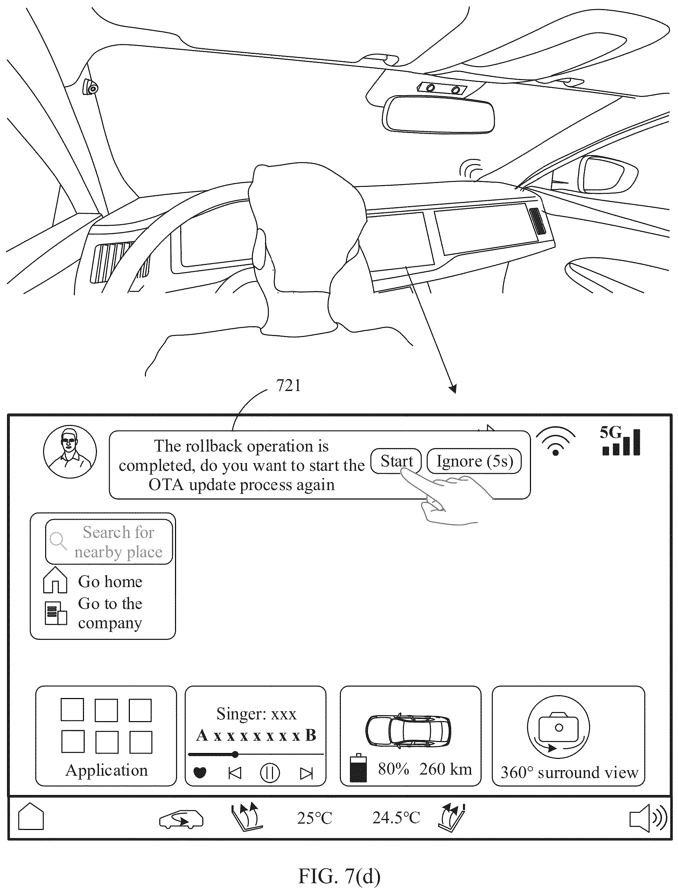

FIG. 7(a) to FIG. 7(d) are a diagram of a scenario to which a processing method according to an embodiment of this application is applicable. The method 300 and the method 400 may be applicable to the scenario.

As shown in FIG. 7(a), an interface 700 and a function bar 710 are displayed on a central control large screen of a vehicle. The interface 700 includes user account login information 701 (an account is not logged in to the current vehicle), a Bluetooth function icon 702, a Wi-Fi function icon 703, a cellular network signal icon 704, a vehicle-mounted map application search box 705, a card 706 for displaying all applications installed on the vehicle, a card 707 for switching to display a vehicle-mounted music application, a card 708 for displaying a state of charge and a remaining traveling mileage of the vehicle, and a card 709 for displaying a 370-degree (°) surround view function of the vehicle. The vehicle-mounted map application search box 705 may include a go home control 7051 and a go to the company control 7052 that are set by a user. The function bar 710 includes an icon 711 for switching to display a desktop of the central control large screen, a vehicle internal circulation icon 712, and a driver seat heating function icon 713, a driver-area air conditioner temperature display icon 714, a front passenger-area air conditioner temperature display icon 715, a front passenger seat heating function icon 716, and a volume setting icon 717.

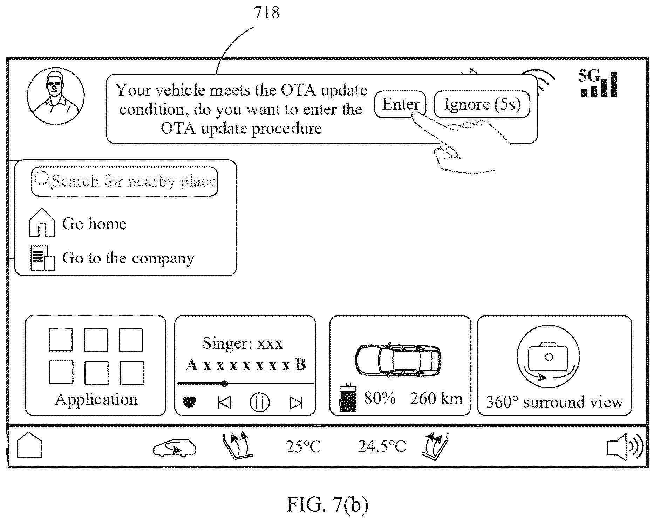

A graphical user interface (graphical user interface, GUI) is shown in FIG. 7(b). The GUI includes a prompt box 718, used to inform the user that the vehicle meets an OTA update condition and whether to enter an OTA update procedure. When the vehicle detects that the driver taps an entry control in the prompt box 718, the vehicle may perform OTA update. In an OTA update process, if the vehicle detects that a failure occurs in a component, the vehicle may perform processing according to a precise rollback rule, and inform the user that the failure occurs in the OTA update process.

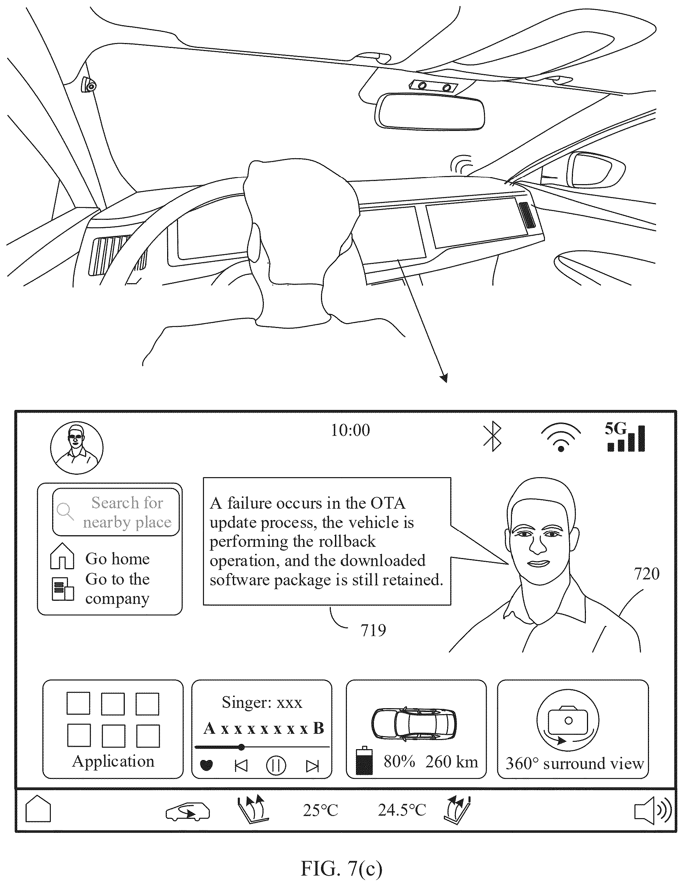

For example, if the vehicle determines that the component that fails to be updated belongs to a mandatory matching relationship component set, the vehicle may skip a remaining component that is in the mandatory matching relationship component set and that is not updated, and roll back an updated component in the mandatory matching relationship component set. If the vehicle determines that the component that fails to be updated does not belong to the mandatory matching relationship component set, the vehicle may continue to perform update based on an update sequence, and roll back the component that fails to be updated. In a process in which the vehicle performs rollback, a GUI shown in FIG. 7(c) may be displayed on the central control large screen of the vehicle. The GUI includes prompt text 719 and a voice assistant 720. The voice assistant 720 may inform, in a form of voice and text, the user that "a failure occurs in the OTA update process, the vehicle is performing a rollback operation, and a downloaded software package is still retained".

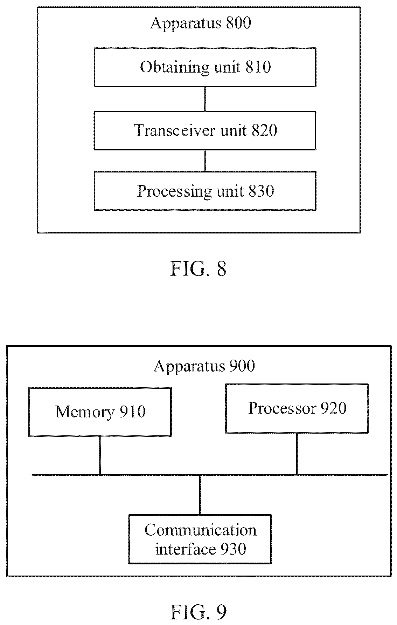

After the rollback operation is completed, a GUI shown in (d) in FIG. 8 may be displayed on the central control large screen of the vehicle. The GUI includes a prompt box 721, used to inform the user that the rollback operation of the vehicle is completed and whether to start the OTA update process again. When the vehicle detects that the driver taps a start control in the prompt box 721, the vehicle only needs to re-update the component that fails to be updated last time.

In this embodiment of this application, in the OTA update process, if a component fails to be updated, the vehicle does not need to skip an update process of a to-be-updated component, and does not need to roll back all of the successfully updated components to a version before the update. In such a processing manner, efficiency of OTA update can be improved, and unnecessary rollback operations can be reduced.

It should be understood that the application scenarios shown in FIG. 7(a) to FIG. 7(d) are merely examples for description, and should not be understood as a limitation on this application. Content prompted by the vehicle to the user may be determined based on an actual application status of the processing method.

It should be further understood that, in embodiments of this application, unless otherwise stated or there is a logic conflict, terms and/or descriptions in all embodiments are consistent and may be mutually referenced, and technical features in different embodiments may be combined based on an internal logical relationship thereof, to form a new embodiment.

Embodiments of this application further provide an apparatus configured to implement any one of the foregoing methods. The apparatus includes units configured to implement steps performed by the transportation means 100 in any one of the foregoing methods.

FIG. 8 is a diagram of a processing apparatus 800 according to an embodiment of this application. The apparatus 800 may include an obtaining unit 810, a transceiver unit 820, and a processing unit 830. The obtaining unit 810 is configured to obtain instructions and/or data. The transceiver unit 820 is configured to receive and send instructions and/or data. The obtaining unit 810 and the transceiver unit 820 may also be referred to as a communication interface or a communication unit. The processing unit 830 is configured to perform data processing, so that the apparatus 800 implements the foregoing processing method.

Optionally, the apparatus 800 may further include a storage unit, configured to implement a corresponding storage function, and store corresponding instructions and/or data.

In a design, the apparatus 800 may be configured to perform actions performed by the transportation means in the foregoing embodiments.

The apparatus 800 may include: an obtaining unit 810, configured to obtain an update sequence of a plurality of components and information about a mandatory matching relationship component set in an over the air OTA update process, where the plurality of components include a first component; and a processing unit 830, configured to: when the first component fails to be updated, based on the update sequence and the information about the mandatory matching relationship component set, update at least a part of to-be-updated components and/or roll back a part of successfully updated components, where an update ranking of the to-be-updated component is later than an update ranking of the first component, and an update ranking of the successfully updated component is earlier than the update ranking of the first component.

In a possible implementation, when the first component is not a component in the mandatory matching relationship component set, the processing unit 830 is specifically configured to: when the first component fails to be updated and the first component is not a last to-be-updated component in the plurality of components, update all of the to-be-updated components based on the update sequence.

In a possible implementation, the first component is a component in the mandatory matching relationship component set; and the processing unit 830 is specifically configured to: when the first component fails to be updated and the successfully updated components include a component in the mandatory matching relationship component set, based on the update sequence, update a component that is in the to-be-updated components and that is not in the mandatory matching relationship component set, and roll back the component that is in the successfully updated components and that is in the mandatory matching relationship component set.

In a possible implementation, the mandatory matching relationship component set is a driving-related component set.

In a possible implementation, the processing unit 830 is further configured to inform a user that a failure occurs in the OTA update process.

In a possible implementation, the processing unit 830 is further configured to skip deleting a downloaded software package corresponding to a component that fails to be updated.

In a possible implementation, the processing unit 830 is further configured to prompt the user to restart the OTA update process.

In a possible implementation, the processing unit 830 is further configured to roll back the first component.

In a possible implementation, the apparatus further includes: a transceiver unit 820, where the transceiver unit 820 is configured to receive OTA update information sent by a server, where the OTA update information includes the update sequence of the plurality of components and the information about the mandatory matching relationship component set.

The apparatus 800 may include: a transceiver unit 820, configured to: send OTA update failure information to a server, where the OTA update failure information indicates that a failure occurs in a first component in an OTA update process, and receive a processing strategy sent by the server, where the processing strategy indicates a transportation means to update at least a part of to-be-updated components and/or roll back a part of successfully updated components, a plurality of components include the first component, an update ranking of the to-be-updated component is later than an update ranking of the first component, and an update ranking of the successfully updated component is earlier than the update ranking of the first component; and a processing unit 830, configured to: according to the processing strategy, update the at least a part of the to-be-updated components and/or roll back the part of the successfully updated components.

In a possible implementation, when the first component is not a component in the mandatory matching relationship component set, and the first component is not a last to-be-updated component in the plurality of components, the processing strategy indicates the transportation means to update all of the to-be-updated components; and the processing unit 830 is specifically configured to update all of the to-be-updated components according to the processing strategy.

In a possible implementation, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set; and the processing unit 830 is specifically configured to: update the component that is in the to-be-updated components and that is not in the mandatory matching relationship component set, and roll back the component that is in the successfully updated components and that is in the mandatory matching relationship component set.

In a design, the apparatus 800 may be configured to perform actions performed by the server in the foregoing embodiments.

The apparatus 800 includes: a transceiver unit 820, where the transceiver unit 820 is configured to receive OTA update information sent by a server, where the OTA update information includes an update sequence of a plurality of components and information about a mandatory matching relationship component set.

The apparatus 800 includes: a transceiver unit 820, configured to receive OTA update failure information sent by a transportation means, where the OTA update failure information indicates that a failure occurs in a first component in an OTA update process; and a processing unit 830, configured to send a processing strategy to the transportation means based on an update sequence of a plurality of components and information about a mandatory matching relationship component set, where the processing strategy indicates the transportation means to update at least a part of to-be-updated components and/or roll back a part of successfully updated components, the plurality of components include the first component, an update ranking of the to-be-updated component is later than an update ranking of the first component, and an update ranking of the successfully updated component is earlier than the update ranking of the first component.

In a possible implementation, when the first component is not a component in the mandatory matching relationship component set, and the first component is not a last to-be-updated component in the plurality of components, the processing strategy indicates the transportation means to update all of the to-be-updated components.

In a possible implementation, when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set.

Optionally, if the apparatus 800 is in the transportation means 100, the processing unit 830 may be the processor 131 shown in FIG. 1.

FIG. 9 shows another processing apparatus 900 according to an embodiment of this application. The apparatus 900 may be used in the transportation means 100 in FIG. 1.

The apparatus 900 includes a memory 910, a processor 920, and a communication interface 930. The memory 910, the processor 920, and the communication interface 930 are connected through an internal connection path. The memory 910 is configured to store instructions. The processor 920 is configured to execute the instructions stored in the memory 910, to control the communication interface 930 to obtain information, or enable the apparatus 900 to implement the foregoing processing method. Optionally, the memory 910 may be coupled to the processor 920 through an interface, or may be integrated together with the processor 920.

It should be noted that the communication interface 930 uses a transceiver apparatus, for example, but not limited to, a transceiver. The communication interface 930 may further include an input/output interface (input/output interface).

The processor 920 stores one or more computer programs, and the one or more computer programs include instructions. When the instructions are run by the processor 920, the processing apparatus 900 is enabled to perform the processing method in the foregoing embodiments.

In an implementation process, steps in the foregoing methods may be implemented by using a hardware integrated logical circuit in the processor 920, or by using instructions in a form of software. The method disclosed with reference to embodiments of this application may be directly performed and completed by a hardware processor, or may be performed and completed by using a combination of hardware in the processor and a software module. The software module may be located in a mature storage medium in the field, for example, a random access memory, a flash memory, a read-only memory, a programmable read-only memory, an electrically erasable programmable memory, or a register. The storage medium is located in the memory 910, and the processor 920 reads information in the memory 910 and completes the steps in the foregoing methods in combination with the hardware of the processor. To avoid repetition, details are not described herein again.

Optionally, the communication interface 930 in FIG. 9 may implement the obtaining unit 810 or the transceiver unit 820 in FIG. 8, and the processor 920 in FIG. 9 may implement the processing unit 830 in FIG. 8.

Optionally, the apparatus 800 or the apparatus 900 may be a computing platform. The computing platform may be a vehicle-mounted computing platform or a cloud computing platform.

Optionally, the apparatus 800 or the apparatus 900 may be in the transportation means 100 in FIG. 1.

Optionally, the apparatus 800 or the apparatus 900 may be the computing platform 130 in the transportation means in FIG. 1.

An embodiment of this application further provides a computer-readable storage medium, where the computer-readable storage medium stores program code, and when the computer program code is run on a computer, the computer is enabled to perform any method in FIG. 3 or FIG. 4A and FIG. 4B.

An embodiment of this application further provides a computer program product, where the computer product includes a computer program, and when the computer program is run, a computer is enabled to perform any method in FIG. 3 or FIG. 4A and FIG. 4B.

An embodiment of this application further provides a chip, including a circuit. The circuit is configured to perform any method in FIG. 3 or FIG. 4A and FIG. 4B.

An embodiment of this application further provides a transportation means, including any processing apparatus in FIG. 8 or FIG. 9.

An embodiment of this application further provides a server, including any processing apparatus in FIG. 8 or FIG. 9.

An embodiment of this application further provides a processing system, including the transportation means and a server.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The software product is stored in a storage medium, and includes several instructions for indicating a computing device (which may be a personal computer, a server, or a network device) to perform all or some of the steps of the methods described in embodiments of this application. The storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A processing method, wherein the method comprises:
obtaining an update sequence of a plurality of components and information about a mandatory matching relationship component set in an over the air OTA update process, wherein the plurality of components comprise a first component; and
when the first component fails to be updated, based on the update sequence and the information about the mandatory matching relationship component set, updating at least a part of to-be-updated components and/or rolling back a part of successfully updated components, wherein an update ranking of the to-be-updated component is later than an update ranking of the first component, and an update ranking of the successfully updated component is earlier than the update ranking of the first component.

2. The method according to claim 1, wherein the first component is not a component in the mandatory matching relationship component set, and when the first component fails to be updated, based on the update sequence and the information about the mandatory matching relationship component set, updating the at least a part of the to-be-updated components and/or rolling back the part of the successfully updated components comprises:
when the first component fails to be updated and the first component is not a last to-be-updated component in the plurality of components, updating all of the to-be-updated components based on the update sequence.

3. The method according to claim 1, wherein the first component is a component in the mandatory matching relationship component set, and when the first component fails to be updated, based on the update sequence and the information about the mandatory matching relationship component set, updating the at least a part of the to-be-updated components and/or rolling back the part of the successfully updated components comprises:
when the first component fails to be updated and the successfully updated components comprise a component in the mandatory matching relationship component set, based on the update sequence, updating a component that is in the to-be-updated components and that is not in the mandatory matching relationship component set, and rolling back the component that is in the successfully updated components and that is in the mandatory matching relationship component set.

4. The method according to any one of claims 1 to 3, wherein the mandatory matching relationship component set is a driving-related component set.

5. The method according to any one of claims 1 to 4, wherein the method further comprises: informing a user that a failure occurs in the OTA update process.

6. The method according to claim 5, wherein the method further comprises: skipping deleting a downloaded software package corresponding to a component that fails to be updated.

7. The method according to claim 5 or 6, wherein the method further comprises:
prompting the user to restart the OTA update process.

8. The method according to any one of claims 1 to 7, wherein the method further comprises:
rolling back the first component.

9. The method according to any one of claims 1 to 8, wherein obtaining the update sequence of the plurality of components and the information about the mandatory matching relationship component set in the over the air OTA update process comprises:
receiving OTA update information sent by a server, wherein the OTA update information comprises the update sequence of the plurality of components and the information about the mandatory matching relationship component set.

10. A processing method, wherein the method comprises:
determining an update sequence of a plurality of components and information about a mandatory matching relationship component set in an OTA update process; and
sending OTA update information to a transportation means, wherein the OTA update information comprises the update sequence of the plurality of components and the information about the mandatory matching relationship component set.

11. A processing method, wherein the method comprises:
receiving OTA update failure information sent by a transportation means, wherein the OTA update failure information indicates that a failure occurs in a first component in an OTA update process; and
sending a processing strategy to the transportation means based on an update sequence of a plurality of components and information about a mandatory matching relationship component set, wherein the processing strategy indicates the transportation means to update at least a part of to-be-updated components and/or roll back a part of successfully updated components, the plurality of components comprise the first component, an update ranking of the to-be-updated component is later than an update ranking of the first component, and an update ranking of the successfully updated component is earlier than the update ranking of the first component.

12. The method according to claim 11, wherein when the first component is not a component in the mandatory matching relationship component set, and the first component is not a last to-be-updated component in the plurality of components, the processing strategy indicates the transportation means to update all of the to-be-updated components.

13. The method according to claim 11, wherein when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set.

14. A processing apparatus, wherein the apparatus comprises:
an obtaining unit, configured to obtain an update sequence of a plurality of components and information about a mandatory matching relationship component set in an over the air OTA update process, wherein the plurality of components comprise a first component; and
a processing unit, configured to: when the first component fails to be updated, based on the update sequence and the information about the mandatory matching relationship component set, update at least a part of to-be-updated components and/or roll back a part of successfully updated components, wherein an update ranking of the to-be-updated component is later than an update ranking of the first component, and an update ranking of the successfully updated component is earlier than the update ranking of the first component.

15. The apparatus according to claim 14, wherein the first component is not a component in the mandatory matching relationship component set; and
the processing unit is specifically configured to: when the first component fails to be updated and the first component is not a last to-be-updated component in the plurality of components, update all of the to-be-updated components based on the update sequence.

16. The apparatus according to claim 14, wherein the first component is a component in the mandatory matching relationship component set; and
the processing unit is specifically configured to: when the first component fails to be updated and the successfully updated components comprise a component in the mandatory matching relationship component set, based on the update sequence, update a component that is in the to-be-updated components and that is not in the mandatory matching relationship component set, and roll back the component that is in the successfully updated components and that is in the mandatory matching relationship component set.

17. The apparatus according to any one of claims 14 to 16, wherein the mandatory matching relationship component set is a driving-related component set.

18. The apparatus according to any one of claims 14 to 17, wherein
the processing unit is further configured to inform a user that a failure occurs in the OTA update process.

19. The apparatus according to claim 18, wherein
the processing unit is further configured to skip deleting a downloaded software package corresponding to a component that fails to be updated.

20. The apparatus according to claim 18 or 19, wherein
the processing unit is further configured to prompt the user to restart the OTA update process.

21. The apparatus according to any one of claims 14 to 20, wherein
the processing unit is further configured to roll back the first component.

22. The apparatus according to any one of claims 14 to 21, wherein the apparatus further comprises: a transceiver unit, wherein
the transceiver unit is configured to receive OTA update information sent by a server, wherein the OTA update information comprises the update sequence of the plurality of components and the information about the mandatory matching relationship component set.

23. A processing apparatus, wherein the apparatus comprises:
a processing unit, configured to determine an update sequence of a plurality of components and information about a mandatory matching relationship component set in an OTA update process; and
a transceiver unit, configured to send OTA update information to a transportation means, wherein the OTA update information comprises the update sequence of the plurality of components and the information about the mandatory matching relationship component set.

24. A processing apparatus, wherein the apparatus comprises:
a transceiver unit, configured to receive OTA update failure information sent by a transportation means, wherein the OTA update failure information indicates that a failure occurs in a first component in an OTA update process; and
a processing unit, configured to send a processing strategy to the transportation means based on an update sequence of a plurality of components and information about a mandatory matching relationship component set, wherein the processing strategy indicates the transportation means to update at least a part of to-be-updated components and/or roll back a part of successfully updated components, the plurality of components comprise the first component, an update ranking of the to-be-updated component is later than an update ranking of the first component, and an update ranking of the successfully updated component is earlier than the update ranking of the first component.

25. The apparatus according to claim 24, wherein when the first component is not a component in the mandatory matching relationship component set, and the first component is not a last to-be-updated component in the plurality of components, the processing strategy indicates the transportation means to update all of the to-be-updated components.

26. The apparatus according to claim 24, wherein when the first component is a component in the mandatory matching relationship component set, the processing strategy indicates the transportation means to update a component that is in the to-be-updated components and that is not in the mandatory matching relationship component set, and roll back a component that is in the successfully updated components and that is in the mandatory matching relationship component set.

27. A processing apparatus, comprising a processor and a memory, wherein the processor is coupled to the memory, and is configured to: read and execute instructions in the memory, to perform the method according to any one of claims 1 to 9.

28. A processing apparatus, comprising a processor and a memory, wherein the processor is coupled to the memory, and is configured to: read and execute instructions in the memory, to perform the method according to any one of claims 10 to 13.

29. A computer-readable storage medium, wherein the computer-readable storage medium stores program code, and when the computer program code is run on a computer, the computer is enabled to perform the method according to any one of claims 1 to 13.

30. A chip, comprising a circuit, wherein the circuit is configured to perform the method according to any one of claims 1 to 13.

31. A transportation means, comprising the processing apparatus according to any one of claims 14 to 22.

32. A server, comprising the processing apparatus according to any one of claims 23 to 26.
